# EUROPEAN PATENT SPECIFICATION

(11) **EP 3 610 727 B1**
(45) Date of publication and mention of the grant of the patent: **26.02.2025**
(21) Application number: 18761240.3
(22) Date of filing: 19.02.2018
(51) Int. Cl.: A01N 65/42, A01N 25/22, A01N 25/30, A01N 25/04, A01N 31/02, A01P 7/00

(54) **BIOCIDE COMPOSITION**
BIOZIDZUSAMMENSETZUNG
COMPOSITION BIOCIDE

(30) Priority: 01.03.2017 ES 201730280
(43) Date of publication of application: 19.02.2020
(73) Proprietor: Seipasa S.A., 22240 Tardienta (Huesca) (ES)
(72) Inventor: ESPINOSA ESCRIG, Francisco, 22240 Tardienta (Huesca) (ES); VERA CALVO, Noelia, 22240 Tardienta (Huesca) (ES); PELEATO ESTAÚN, Pedro, 22240 Tardienta (Huesca) (ES)
(74) Representative: ABG Intellectual Property Law, S.L.
(86) International application number: PCT/ES2018/070115
(87) International publication number: WO 2018/158477

(56) References cited:
- WO-A2-2005/055713
- WO-A2-2009/019299
- CN-A- 105 309 516
- US-A1- 2008 214 678
- US-A1- 2011 312 496
- HUA MING ZHENG ET AL: "Preparation Methods for Monodispersed Garlic Oil Microspheres in Water Using the Microemulsion Technique and Their Potential as Antimicrobials : Preparation of monodispersed garlic oil...", JOURNAL OF FOOD SCIENCE, vol. 78, no. 8, 1 August 2013 (2013-08-01), US, pages N1301 - N1306, XP055767740, ISSN: 0022-1147, DOI: 10.1111/1750-3841.12208

## Description

### Technical Field of the Invention

The present invention describes a biocidal composition comprising diallyl sulfides as a biocidal agent. The composition is characterized by the presence of:
ii) a polar diluent which comprises dialkyl succinates, dialkyl glutarates, or dialkyl adipate:
iii) surface active agents comprising: (a) at least one non-ionic surfactant with and HLB value between 9.5 and 17 and (b) at least one anionic surfactant selected from the group consisting of alkylsulfosuccinate salts, alkylbenzene sulfonate salts and ethoxylated aryl alkyl phosphate esters, and iv) 2-ethyl-1-hexanol.

### Background of the Invention

In recent years, there has been an inclination to put environmentally friendly biocidal agents on the market. Plant extracts and their active ingredients have exhibited biocidal activity for different types of pests and pathogens, particularly in agricultural crops.

In particular, as described in US 2009/0317500, diallyl sulfides present in garlic oil and garlic extracts have exhibited repellant properties.

CN 105309516 A discloses a stable biocidal microemulsion composition comprising: garlic and tea extracts and as auxiliaries: i) at least one non-ionic surfactant; ii) at least one anionic surfactant; iii) a polar solvent; iv) an antifreeze.

HUA MING ZHENG ET AL: JOURNAL OF FOOD SCIENCE, vol. 78, no. 8 discloses a stable biocidal microemulsion comprising: garlic oil, oleic acid, ethoxylated castor oil, n-butanol and water.

US 2011/312496 A1 discloses a stable microemulsion formulation for volatile pesticides comprising: 1) 10-25 % pesticide; 2) 8-25 % of one or more non-polar solvents containing oxygen atoms (e.g. mixture of dimethyl glutarate, dimethyl succinate and dimethyl adipate and/or 2-ethylhexanol); 3) 10-20 % of water soluble polyol; 4) 10-25 % of one or more nonionic surfactants having a HLB from 9 to 15; 5) 2-10 % of one or more anionic surfactants; 6) 20-40 % water.

US 2008/214678 A1 discloses the use of diallyl sulfides against tetranychid mites.

Certain natural products are also known to be toxic for some mammals and the environment. Pyrethrins isolated from *Tanacetum cinerariifolium* have been used as an insecticide because they attack the nervous system of insects, although different studies show pyrethrin intoxication in mammals and pyrethrin toxicity in bees.

Extracts from the *Liliaceae* family, comprising diallyl sulfides and alkylcysteine sulfoxides, are to known to exhibit biocidal activity but are unstable.

The state of the art describes a variety of surface active agents: anionic compounds, cationic compounds, non-ionic compounds, ampholytes, or mixtures thereof.

Non-ionic surfactants include, among others: alcohols, phenols, polyoxyalkylene ethers having mixtures of oxyalkylene, carboxylate, and sulfonates groups of polyoxyalkylene glycols, amine oxides, sulfoxides, polysorbates, alkyl polyglucosides, synthetic resins, phosphoric acid esters, phosphine oxides, lignin derivatives, silicon compounds, ethoxylated seed oils, products of an undetermined composition, etc.

The hydrophilic-lipophilic balance or HLB of a surfactant is a measure of the degree to which it is hydrophilic or lipophilic, determined by means of calculating values for the different regions of the molecule. HLB can be calculated by means of the methods described by Griffin or Davies. HLB values range from 1.5 for anti-foaming agents to 18 for solubilizers.

Document CN103535389 describes an insecticidal composition against red spider mites comprising garlic extracts and pyrethrins. Accordingly, this formulation can lead to intoxication in mammals.

The document closest to the invention, i.e., document CN1615704, describes a composition against red spider mites comprising juice obtained by means of crushing and fermenting garlic, chili, and castor oil. This document does not describe the stability of the components nor does it quantify the effectiveness of the formulation.

### Objective of the invention

The problem solved by the invention relates to finding a biocidal composition comprising diallyl sulfides which is stable over time. The solution found by the inventors is a composition comprising:
ii) a polar diluent comprising dialkyl succinates, dialkyl glutarates or dialkyl adipate; iii) surface active agents comprising: (a) at least one non-ionic surfactant with an HLB value between 9.5 and 17 and (b) at least one anionic surfactant; and iv) 2-ethyl-1-hexanol.

The non-ionic surfactants are selected from:
- ethoxylated sorbitan esters,
- ethoxylated oils or fatty acids, and
- ethoxylated fatty acid alcohols.

The anionic surfactants comprise alkylsulfosuccinate salts, alkylbenzene sulfonate salts, or ethoxylated aryl alkyl phosphate esters.

The concentrations of allyl sulfide of the described formulations remained unchanged for 14 days stored at 54°C. It can thus be extrapolated that the formulations will be stable for at least two years at room temperature.

Another problem solved by the invention relates to finding a pyrethrin-free biocidal composition against red spider mites that is not toxic for mammals or the environment.

The formulations described in the invention showed an efficacy statistically similar to those obtained by fenpyroximate or abamectin, which are toxic reference biocidal agents.

The described formulations were also effective against different lepidopterous species affecting horticultural crops, such as, *Spodoptera exigua* and *Mamestra brassicae, Helicoverpa armigera, Tuta absoluta, Pieris rapae,* or *Phyllocnistis citrella*); tetranychid mites, such as *Tetranychus urticae, Panonychus citri, Eutetranychus orientalis;* and thrips, such as, *Frankliniella occidentalis, Thrips tabaci, or Pezothrips kellyanus.*

### Description of the Drawings

Figures 1 and 2 show the efficacy of the emulsifiable compositions and the microemulsion compositions in the treatment of apple tree red spider mites in comparison with fenpyroximate
Figures 3 and 4 show the efficacy of the emulsifiable compositions and the microemulsion compositions in the treatment of peach red spider mites in comparison with fenpyroximate.
Figures 5 and 6 show the efficacy of the emulsifiable compositions and the microemulsion compositions on citrus fruit red spider mites in comparison with abamectin.
Figures 7 and 8 show the efficacy of the emulsifiable compositions and the microemulsion compositions in the treatment of lettuce worms (*Spodoptera exigua*) in comparison with azadirachtin.
Figure 9 shows the efficacy of the emulsifiable compositions and the microemulsion compositions on pepper worms in comparison with *Bacillus thuringiensis.*
Figure 10 shows efficacy of the emulsifiable compositions and the microemulsion compositions on *Frankliniella occidentalis* in peppers in comparison with azadirachtin.

In the drawings, the reference MEGE corresponds to microemulsion formulations and the reference ECGE corresponds to emulsifiable formulations.

### Detailed Description of the Invention

The compositions comprise:
- at least one diallyl sulfide,
- a polar diluent,
- surface active agents,
- a C4-C9 alkanol, and
wherein the surface active agents comprise at least one non-ionic surfactant with an HLB value between 9.5 and 17 and at least one anionic surfactant, all components as defined below and in claims.

The diallyl sulfides comprise diallyl sulfide, diallyl disulfide, diallyl trisulfide, diallyl tetrasulfide defined by the formula: 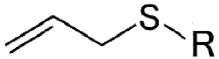 where R is

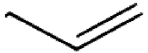

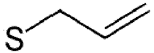

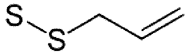

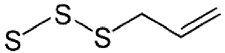

Preferably, the biocidal compositions comprise *Allium sativum* extracts obtainable by means of methods known to one skilled in the art, as described in detail in Example 7, and said compositions being quantified in diallyl sulfides.

The polar diluents comprise dialkyl succinates, dialkyl glutarates, dialkyl adipate, and optionally water and glycols. Preferably, the polar diluents are mixtures of methyl succinate, methyl glutarate, dimethyl adipate, and optionally water and propylene glycol, which are biodegradable diluents.

The non-ionic surface active agents are selected from:
- polyoxyethylene sorbitan esters,
- ethoxylated oils or fatty acids, and
- ethoxylated fatty acid alcohols.

Preferably, the polyoxyethylene sorbitan esters are polyoxyethylene (20) sorbitan monolaurate and polyoxyethylene (20) sorbitan monooleate, wherein the HLB value for polyoxyethylene (20) sorbitan monolaurate is 16.7 and the HLB value for polyoxyethylene (20) sorbitan monooleate is 15.

Preferably, the ethoxylated oils are castor oil with 20 moles of ethylene oxide or castor oil with 36 moles of ethylene oxide, both with CAS number 61791-12-6; wherein the HLB value for ethoxylated castor oil with 20 moles of ethylene oxide is 9.9, whereas the HLB value for castor oil with 36 moles of ethylene oxide is 12.6.

Preferably, the ethoxylated fatty acid is polyethylene glycol laurate (9) with an HLB value of 13.

Preferably, the ethoxylated fatty acid alcohol is ethoxylated isotridecyl alcohol with 8 moles of ethylene oxide with an HLB value of 12.8.

The anionic surfactants are selected from alkylsulfosuccinate salts, alkylbenzene sulfonate salts, or ethoxylated aryl alkyl phosphate esters.

Preferably, the anionic surfactants are sodium dioctyl sulfosuccinate, calcium dodecylbenzene sulfonate, or aryl alkyl phosphate ester 10 OE.

The C4-C9 alkanol is 2-ethyl-1-hexanol.

The compositions described in the invention are formulated as an emulsifiable concentrate or microemulsions.

Preferably, the emulsifiable concentrated compositions use a mixture of dimethyl succinate, dimethyl glutarate, and dimethyl adipate as a diluent.

The described compositions are effective for treatment against tetranychid mites (*Tetranychus urticae, Panonychus citri, Eutetranychus orientalis*), lepidopterous larvae (*Spodoptera exigua, Mamestra brassicae, Helicoverpa armigera, Tuta absoluta, Pieris rapae, Phyllocnistis citrella*), and thrips (*Frankliniella occidentalis, Thrips tabaci, Pezothrips kellyanus.*

### Example 1. Biocidal microemulsion compositions

Biocidal microemulsion compositions are described below. All concentrations are expressed in weight/weight. The table describes the HLB (hydrophilic-lipophilic balance) value for non-ionic surfactants.

**Table 1**

| Surfactants | | HLB | % | % | % | % | % | % | % | % | % |
|---|---|---|---|---|---|---|---|---|---|---|---|
| Non-ionic | Castor oil 20 OE | 9. 9 | 6 | 8 | 10 | 0 | 0 | 0 | 0 | 0 | 5 |
| | Castor oil 36 OE | 12.6 | 0 | 0 | 0 | 15 | 18 | 20 | 0 | 0 | 0 |
| | Lauric acid 9 OE | 13.3 | 0 | 0 | 0 | 0 | 0 | 0 | 22 | 23 | 0 |
| | Sorbitan monooleate 20 OE | 15 | 7 | 8 | 9 | 0 | 0 | 0 | 0 | 0 | 24 |
| | Sorbitan monolaurate 20 OE | 16.7 | 0 | 0 | 0 | 5 | 6 | 7 | 0 | 0 | 0 |
| | Isotridecyl alcohol 8 OE | 12.8 | 0 | 0 | 0 | 0 | 0 | 0 | 11 | 13 | 0 |
| Anionic | Sodium salt of dioctyl sulfosuccinate | | 10 | 12 | 14 | 0 | 0 | 0 | 0 | 0 | 15 |
| | Calcium dodecylbenzene sulfonate | | 0 | 0 | 0 | 2 | 4 | 6 | 0 | 0 | 0 |
| | Aryl alkyl phosphate ester 10 OE | | 0 | 0 | 0 | 0 | 0 | 0 | 2 | 4 | 0 |
| | Garlic extract | | 1 | 3 | 5 | 1 | 3 | 5 | 1 | 3 | 6 |
| | 2-ethyl-1-hexanol | | 1 | 2 | 3 | 1 | 2 | 3 | 1 | 2 | 3 |
| | Propylene glycol | | 5 | 6 | 8 | 5 | 8 | 10 | 5 | 10 | 12 |
| | Deionized water | | 64 | 53 | 41 | 64 | 50 | 38 | 50 | 35 | 23 |
| | Dimethyl adipate | | 5.3 | 7.1 | 8.9 | 1.5 | 1.9 | 2.3 | 0.1 | 0.1 | 0.1 |
| | Dimethyl glutarate | | 0.6 | 0.8 | 1 | 4.1 | 5.3 | 6.5 | 5.3 | 6.6 | 7.9 |
| | Dimethyl succinate | | 0.1 | 0.1 | 0.1 | 1.4 | 1.8 | 2.2 | 2.6 | 3.3 | 4 |
| | TOTAL | | 100 | 100 | 100 | 100 | 100 | 100 | 100 | 100 | 100 |

### Example 2. Emulsifiable concentrated composition

Emulsifiable biocidal compositions are described below. All concentrations are expressed in weight/weight. The described compositions are applied after diluting in water. The table describes the HLB (hydrophilic-lipophilic balance) value for non-ionic surfactants.

**Table 2**

| | | HLB | % | % | % | % | % | % | % | % | % |
|---|---|---|---|---|---|---|---|---|---|---|---|
| Surfactants | | | | | | | | | | | |
| Non-ionic | Castor oil 20 OE | 9. 9 | 12 | 14 | 16 | 0 | 0 | 0 | 0 | 0 | 0 |
| | Castor oil 36 OE | 12.6 | 0 | 0 | 0 | 7 | 9 | 11 | 0 | 0 | 0 |
| | Lauric acid 9 OE | 13.3 | 0 | 0 | 0 | 0 | 0 | 0 | 6 | 8 | 10 |
| | 20 OE monooleate | 15 | 10 | 12 | 14 | 0 | 0 | 0 | 0 | 0 | 0 |
| | Sorbitan monolaurate 20 OE | 16.7 | 0 | 0 | 0 | 7 | 9 | 11 | 0 | 0 | 0 |
| | Isotridecyl alcohol 8 OE | 12.8 | 0 | 0 | 0 | 0 | 0 | 0 | 12 | 14 | 16 |
| Anionic | Sodium salt of dioctyl sulfosuccinate | | 7 | 9 | 11 | 0 | 0 | 0 | 0 | 0 | 0 |
| | Calcium dodecylbenzene sulfonate Rryl alkyl | | 0 | 0 | 0 | 4 | 6.5 | 8 | 0 | 0 | 0 |
| | Aryl alkyl phosphate ester 10 OE | | 0 | 0 | 0 | 0 | 0 | 0 | 4 | 8 | 11 |
| | Garlic extract. | | 7 | 9 | 12 | 7 | 9 | 12 | 7 | 9 | 12 |
| | 2-ethyl- 1-hexanol | | 1 | 2 | 3 | 1 | 3 | 3 | 1 | 2 | 3 |
| | Propylene glycol | | 0 | 0 | 0 | 0 | 0 | 0 | 0 | 0 | 0 |
| | Deionized water | | 0 | 0 | 0 | 0 | 0 | 0 | 0 | 0 | 0 |
| | Dimethyl adipate | | 56.1 | 48.1 | 39.2 | 15.5 | 13.3 | 11.6 | 0.7 | 0.6 | 0.5 |
| | Dimethyl glutarate | | 6.3 | 5.4 | 4 . 4 | 43.7 | 37.5 | 32.5 | 46.2 | 38.9 | 31.7 |
| | Dimethyl succinate | | 0.6 | 0.5 | 0.4 | 14.8 | 12.7 | 11 | 23.1 | 19.5 | 15.8 |
| | TOTAL | | 100 | 100 | 100 | 100 | 100 | 100 | 100 | 100 | 100 |

The formulations were diluted in water to create an emulsion and for subsequent application.

### Example 3. Stability studies

An accelerated stability study was performed and the allyl sulfide content in the emulsifiable formulation was determined according to Table 3:

**Table 3**

| | % |
|---|---|
| Lauric acid 9 OE | 10 |
| Isotridecyl alcohol 8 OE | 16 |
| Aryl alkyl phosphate ester 10 OE | 11 |
| Garlic extract | 12 |
| 2-ethyl-1-hexanol | 3 |
| Dimethyl adipate | 0.5 |
| Dimethyl glutarate | 31.7 |
| Dimethyl succinate | 15.8 |
| TOTAL | 100 |

wherein the concentration of allyl sulfides in the preceding composition is described in detail in Table 4.

**Table 4**

| 12% garlic extract (w/w) | % (w/w) Diallyl sulfide | % (w/w) Diallyl disulfide | % (w/w) Diallyl trisulfide | % (w/w) Diallyl tetrasulfide |
|---|---|---|---|---|
| 25°C T=0 days | 0.59 | 5.02 | 2.59 | 0.98 |
| 54°C T=14 days | 0.57 | 5.01 | 2.57 | 0.97 |

An accelerated stability study was performed and the allyl sulfide content in the composition in the form of the microemulsion described in detail in Table 5 was determined.

**Table 5**

| % | % |
|---|---|
| Garlic extract | 1 |
| Castor oil 36 OE | 6 |
| Sorbitan monolaurate 20 OE | 7 |
| Calcium dodecylbenzene sulfonate | 10 |
| 2-ethyl-1-hexanol | 1 |
| Propylene glycol | 5 |
| Deionized water | 64 |
| Dimethyl adipate | 5.3 |
| Dimethyl glutarate | 0.6 |
| Dimethyl succinate | 0.1 |
| TOTAL | 100 |

wherein the concentration of allyl sulfides in the preceding composition is described in detail in Table 6:

**Table 6**

| 1% garlic extract (w/w) | % (w/w) Diallyl sulfide | % (w/w) Diallyl disulfide | % (w/w) Diallyl trisulfide | % (w/w) Diallyl tetrasulfide |
|---|---|---|---|---|
| 25°C T=0 days | 0.05 | 0.42 | 0.22 | 0.08 |
| 54°C T=14 days | 0.55 | 0.41 | 0.21 | 0.08 |

### Example 4. Efficacy study on apple tree red spider mites

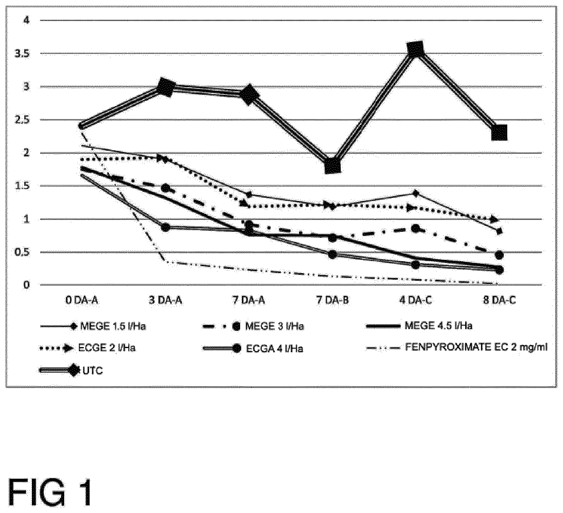

A study was performed to evaluate the efficacy of the emulsifiable compositions and the microemulsion compositions. The number of individual red spider mites per leaf was significantly reduced, particularly at medium and high doses of the microemulsions (3 and 4.5 l/Ha) and at a high dose of the emulsifiable compositions (4 l/Ha). Figure 1.

The formulations used for the efficacy studies were: Microemulsion compositions according to Table 7

**Table 7**

| % | % |
|---|---|
| Garlic extract | 1 |
| Castor oil 36 OE | 15 |
| Sorbitan monolaurate 20 OE | 5 |
| Calcium dodecylbenzene sulfonate | 2 |
| 2-ethyl-1-hexanol | 1 |
| Propylene glycol | 5 |
| Deionized water | 64 |
| Dimethyl adipate | 1.5 |
| Dimethyl glutarate | 4.1 |
| Dimethyl succinate | 1.4 |
| TOTAL | 100 |

wherein the concentration of allyl sulfides in the composition is described in detail in Table 8.

**Table 8**

| 1% garlic extract (w/w) | % (w/w) Allyl sulfide | % (w/w) Allyl disulfide(w/w) | % (w/w) Allyl trisulfide | % (w/w) Allyl tetrasulfide |
|---|---|---|---|---|
| | 0.05 | 0.42 | 0.23 | 0.08 |

The emulsifiable composition used is described in detail in Table 9.

**Table 9**

| % | % |
|---|---|
| Garlic extract | 12 |
| Castor oil 36 OE | 11 |
| Sorbitan monolaurate 20 OE | 11 |
| Calcium dodecylbenzene sulfonate | 8 |
| 2-ethyl-1-hexanol | 3 |
| Dimethyl adipate | 11.6 |
| Dimethyl glutarate | 32.5 |
| Dimethyl succinate | 11 |
| TOTAL | 100 |

wherein the concentration of allyl sulfides is described in detail in Table 10.

**Table 10**

| 12% garlic extract (w/w) | % (w/w) Diallyl sulfide | % (w/w) Diallyl disulfide(w/w) | % (w/w) Diallyl trisulfide | % (w/w) Diallyl tetrasulfide |
|---|---|---|---|---|
| | 0.59 | 5.02 | 2.59 | 0.98 |

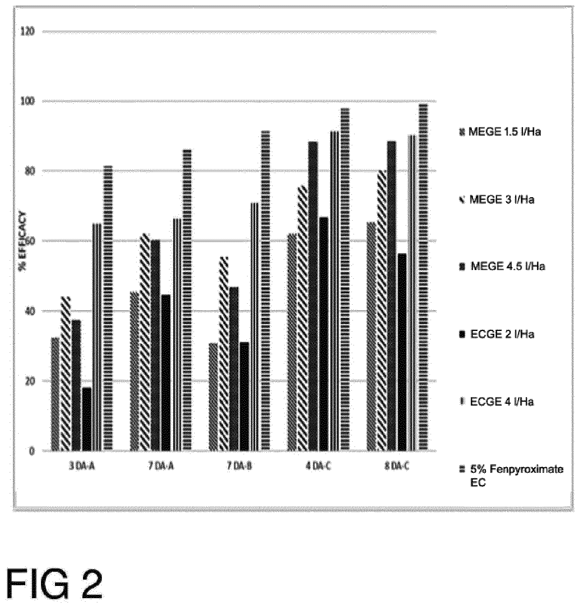

A study was performed to evaluate the efficacy of the emulsifiable compositions and the microemulsion compositions described above (Tables 8-10). Medium and high doses of the microemulsion compositions (3 and 4.5 l/Ha) and a high dose of the emulsifiable formulations (4 l/Ha) reached efficacies of 80-90%, which are statistically similar to those obtained by the reference (fenpyroximate). Figure 2.

### Example 5. Efficacy study in peach red spider mites

An efficacy study in peach red spider mites was performed on the compositions described in detail in Tables 8-10.

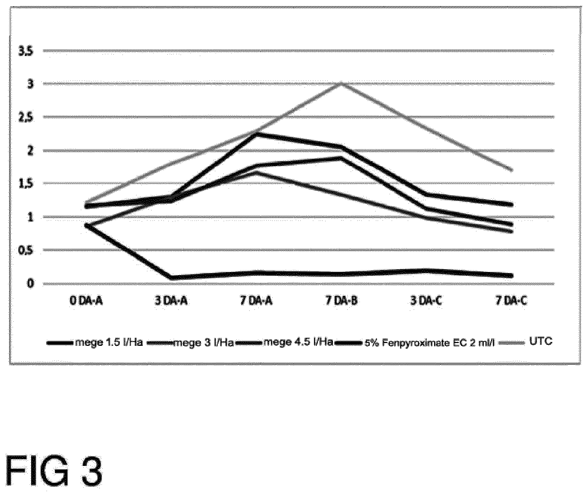

It was observed that the spider mite populations exhibit a less pronounced increase in the treatments of the microemulsion formulation and significant differences are observed with the control populations after the third application of the product. Figure 3.

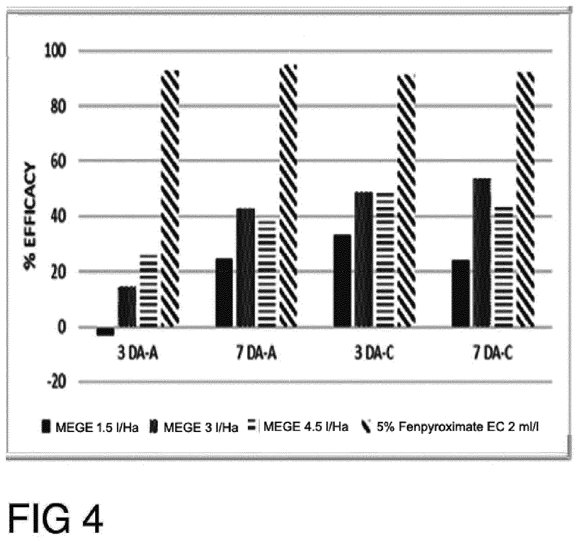

The efficacies obtained using the microemulsion formulation reach mean values for the medium (3 l/Ha) and high (4.5 l/Ha) doses, with a maximum efficacy of 53%. Figure 4

### Example 6. Efficacy study on citrus fruit red spider mites

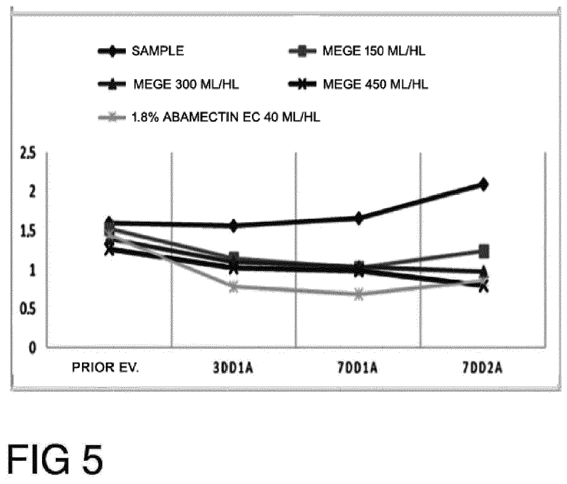

The severity of the formulation described in Tables 7-8 (150, 300, and 450 ml/hl) at 3 doses was studied. The results show a decrease in red spider mite populations. Seven days after the second application (7DD2A), the medium and high doses have populations similar to those of the reference (abamectin). Figure 5.

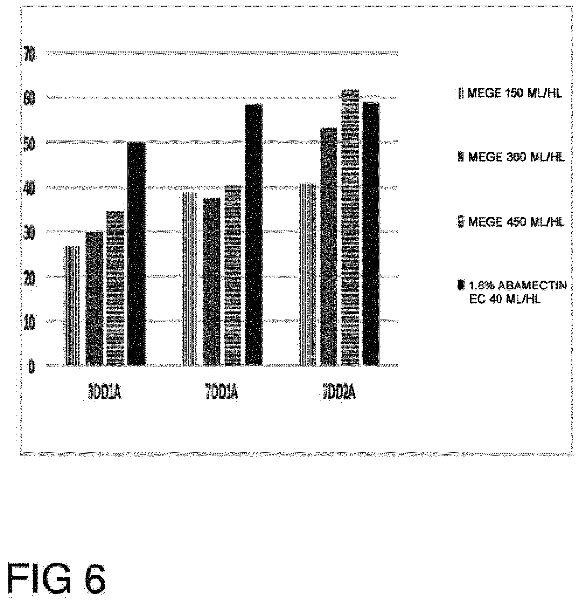

Efficacy after 2 applications was studied, with the medium and high doses of the formulation described in Tables 7-8 showing efficacies of the order of 53-62%, which are similar to those of the reference (abamectin). Figure 6

### Example 7. Obtaining garlic extracts

Garlic extract is obtained from any variety of *Allium sativum* cultured without pesticide residues.

Dry and chopped cloves of garlic are extracted by means of a stream of water vapor. Water is eliminated from the obtained oil by condensation. The obtained oil has a density of 1.07-1.09 mg/ml and an Oil refractive index of 1.56-1.58.

### Example 8. Efficacy study in lettuce worms (Spodoptera exigua)

An efficacy study was performed in lettuce worms (*Spodoptera exigua)* for different compositions as described in detail below.

| Treat. No. | Type | Active ingredient | Concentration | Dose |
|---|---|---|---|---|
| 1 | Control | ----------- | | |
| 2 | Microemulsion | Garlic extract | 3% | 1.5 nl/Ha |
| 3 | Microemulsion | Garlic extract | 3% | 3.0 l/Ha |
| 4 | Microemulsion | Garlic extract | 3% | 4.5 l/Ha |
| 5 | Emulsifiable concentrate | Garlic extract | 9% | 2.0 l/Ha |
| 6 | Emulsifiable concentrate | Azadirachtin | 3.2% | 125 ml/100 l |

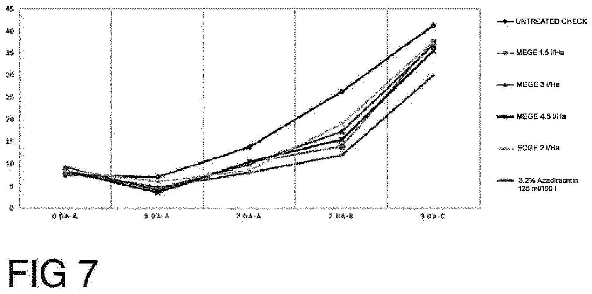

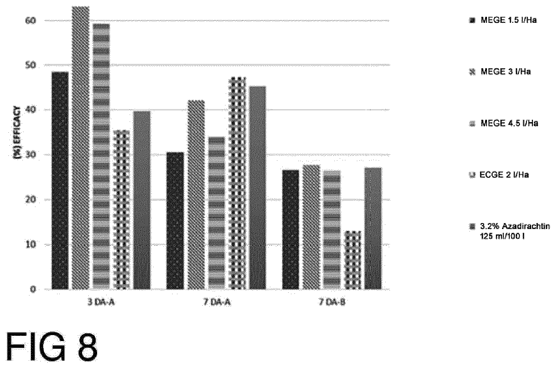

The results obtained for formulations containing garlic extracts, quantified in allyl polysulfides, were equivalent to the results obtained with the reference product (azadirachtin) at 3 and 9 days of application. Figures 7 and 8.

### Example 9. Efficacy study in peppers (Mamestra brassicae, Autographa gamma, and other worms)

An efficacy study was performed in pepper worms (*Mamestra brassicae*) and other worms for the different compositions as described in detail below:

| Treat. No. | Type | Active ingredient | Concentration | Dose |
|---|---|---|---|---|
| 1 | Microemulsion | Garlic extract | 3% | 1500 ml/Ha |
| 2 | Microemulsion | Garlic extract | 3% | 3000 ml/Ha |
| 3 | Microemulsion | Garlic extract | 3% | 4500 ml/Ha |
| 4 | Emulsifiable concentrate | Garlic extract | 3% | 2000 ml/Ha |
| 5 | Emulsifiable concentrate | Garlic extract | 9% | 4000 ml/Ha |
| 6 | Wettable powder | *Bacillus thuringiensis 15 million international units (MIU)*/*g* | 10% | 600 g/Ha |
| 7 | CONTROL | ------- | | |

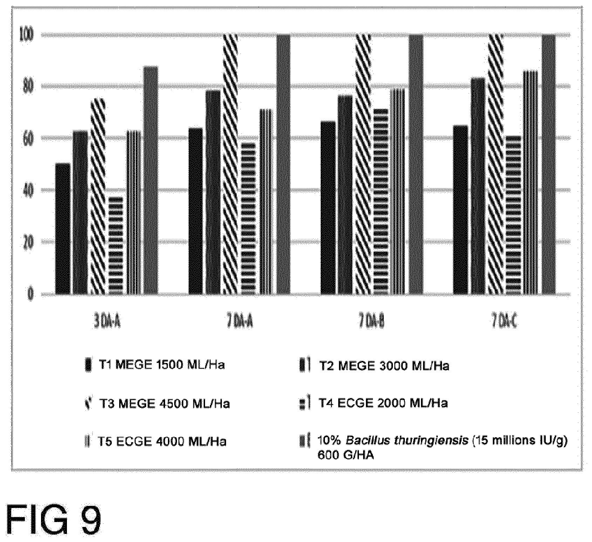

The results obtained for formulations containing garlic extracts, quantified in allyl polysulfides, were equivalent to the results obtained with the reference products *Bacillus thuringiensis* subspecies *Aizawai* (15 MIU/g). Figure 9.

### Example 10. Efficacy study on thrips (Frankliniella occidentalis) in peppers

A study was performed to evaluate the efficacy of emulsifiable compositions versus a composition in the form of a microemulsion, using a 3.2% emulsifiable azadirachtin concentrate as a reference product. The different compositions are described in detail below.

| Treat. No. | Type | Active ingredient | Concentration | Dose |
|---|---|---|---|---|
| 1 | Control | ------------ | | |
| 2 | Emulsifiable concentrate | Garlic extract | 12% | 1.5 l/Ha |
| 3 | Emulsifiable concentrate | Garlic extract | 12% | 3.0 l/Ha |
| 4 | Emulsifiable concentrate | Garlic extract | 12% | 4.5 l/Ha |
| 5 | Microemulsion | Garlic extract | 5% | 2.0 l/Ha |
| 6 | Emulsifiable concentrate | Azadirachtin | 3.2% | 150 ml/100 l |

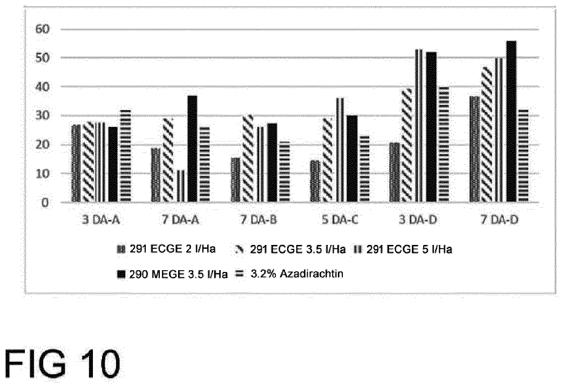

The efficacy results obtained for formulations containing garlic extracts, quantified in allyl polysulfides, showed efficacies similar to or greater than the reference treatment. Figure 10.

## Claims

1. A biocidal composition comprising:
- at least one diallyl sulfide of formula 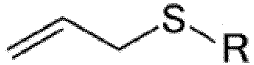 where R is selected from 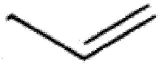 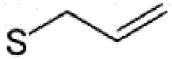 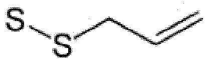
- a polar diluent which comprises: dialkyl succinates, dialkyl glutarates, or dialkyl adipate,
- surface active agents,
- a C4-C9 alkanol which is 2-ethyl-1-hexanol, **characterized in that** the surface active agents comprise:
- at least one non-ionic surfactant with an HLB value between 9.5 and 17,
- at least one anionic surfactant selected from the group consisting of alkylsulfosuccinate salts, alkylbenzene sulfonate salts and ethoxylated aryl alkyl phosphate esters.

2. The composition according to claim 1, **characterized in that**:
- the non-ionic surfactants are selected from:
- ethoxylated sorbitan esters
- ethoxylated oils or fatty acids, and
- ethoxylated fatty acid alcohols
- the anionic surfactants are selected from:
- alkylsulfosuccinate salts,
- alkylbenzene sulfonate salts,
- ethoxylated aryl alkyl phosphate esters.

3. The composition according to the preceding claims, the weight/weight concentration of which is:
| | |
|---|---|
| *- Allium sativum* extract comprising a diallyl su lfide | 1-12% |
| - surface active agents | 18-45% |
| - C4-C9 alkanol | 1-3% |
| - diluents | q.s. 100% |

4. The composition according to the preceding claims, **characterized in that** it is an emulsifiable composition and the diluent is a mixture of dimethyl succinate, dimethyl glutarate, and dimethyl adipate.

5. Use of the biocidal formulations according to the preceding claims for treatment against tetranychid mites, lepidopterous larvae and thrips.

6. Use according to claim 5, wherein the tetranychid mites are selected from the group consisting of *Tetranychus urticae, Panonychus citri* and *Eutetranychus orientalis;* the lepidopterous larvae are selected from the group consisting of *Spodoptera exigua, Mamestra brassicae, Helicoverpa armigera, Tuta absoluta, Pieris rapae* and *Phyllocnistis citrella*; and the thrips are selected from the group consisting of *Frankliniella occidentalis, Thrips tabaci* and *Pezothrips kellyanus*

## Patentansprüche

1. Biozidzusammensetzung, die aufweist:
- mindestens ein Diallylsulfid der Formel 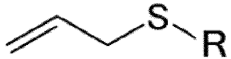 in welcher R ausgewählt ist aus 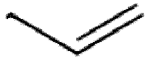 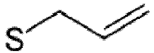 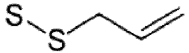
- ein polares Verdünnungsmittel, das aufweist: Dialkylsuccinate, Dialkylglutarat, oder Dialkyladipat,
- oberflächenaktive Mittel,
- ein C4-C9-Alkanol, das 2-Ethyl-1-hexanol ist,
**dadurch gekennzeichnet, dass** die oberflächenaktiven Mittel aufweisen:
- mindestens ein nichtionisches Tensid mit einem HLB-Wert zwischen 9,5 und 17,
- mindestens ein anionisches Tensid, das ausgewählt ist aus der Gruppe bestehend aus Alkylsulfosuccinatesalze, Alkylbenzolsulfonatsalzen, und ethoxylierten Arylalkylphosphatestern.

2. Zusammensetzung nach Anspruch 1, **dadurch gekennzeichnet, dass**
- die nichtionischen Tenside ausgewählt sind aus:
- ethoxylierten Sorbitanestern
- ethoxylierten Ölen oder Fettsäuren, und
- ethoxylierten Fettsäurealkoholen
- die anionischen Tenside ausgewählt sind aus:
- Alkylsulfosuccinatsalzen,
- Alkylbenzolsulfonatsalzen,
- ethoxylierten Arylalkylphosphatestern.

3. Zusammensetzung nach den vorstehenden Ansprüchen, deren Gewicht/Gewicht-Konzentration beträgt:
| | |
|---|---|
| - *Allium-sativum-*Extrakt*,* der ein Diallylsulfid aufweist, | 1-12 % |
| - oberflächenaktive Mittel | 18-45 % |
| - C4-C9-Alkanol | 1-3 % |
| - Verdünnungsmittel | q.s. 100 % |

4. Zusammensetzung nach den vorstehenden Ansprüchen, **dadurch gekennzeichnet, dass** es sich um eine emulgierbare Zusammensetzung handelt und das Verdünnungsmittel eine Mischung aus Dimethylsuccinat, Dimethylglutarat und Dimethyladipat ist.

5. Verwendung der Biozidzusammensetzung nach den vorstehenden Ansprüchen zur Behandlung gegen Tetranychidenmiben, Lepidopterenlarven und Thripse.

6. Verwendung nach Anspruch 5, wobei die Tetranychidenmilben ausgewählt sind aus der Gruppe bestehend aus *Tetranychus urticae, Panonychus citri* und *Eutetranychus orientalis;* die Lepidopterenlarven ausgewählt sind aus der Gruppe bestehend aus *Spodoptera exigua, Mamestra brassicae, Helicoverpa armigera, Tuta absoluta, Pieris rapae und Phyllocnistis citrella*; und die Thripse ausgewählt sind aus der Gruppe bestehend aus *Frankliniella occidentalis, Thrips tabaci* und *Pezothrips kellyanus.*

## Revendications

1. Composition biocide comprenant :
- au moins un sulfure de diallyle de formule 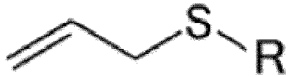 où R est choisi parmi 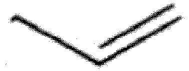 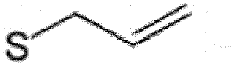 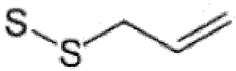
- un diluant polaire qui comprend :
succinates de dialkyle, glutarates de dialkyle ou adipate de dialkyle,
- agents de surface,
- un alcanol en C4-C9 qui est le 2-éthyl-1-hexanol,
**caractérisé en ce que** les agents de surface comprennent :
au moins un tensioactif non ionique ayant une valeur HLB comprise entre 9.5 et 17,
- au moins un tensioactif anionique choisi dans le groupe constitué par les sels d'alkylsulfosuccinate, les sels d'alkylbenzène sulfonate et les esters de phosphate d'arylalkyle éthoxylés.

2. La composition selon la revendication 1, **caractérisée en ce que** :
- les tensioactifs non ioniques sont choisis parmi :
esters de sorbitane éthoxylés
huiles ou acides gras éthoxylés, et
alcools éthoxylés d'acides gras
- les tensioactifs anioniques sont choisis parmi :
sels d'alkylsulfosuccinate,
sels de sulfonate d'alkylbenzène,
esters de phosphate d'arylalkyle éthoxylés.

3. La composition selon les revendications précédentes, dont la concentration poids/poids est :
- extrait d'Allium sativum comprenant un sulfure de diallyle 1 à 12 %
- agents de surface 18-45%
- Alcanol en C4-C9 1-3%
- diluants q.s. 100%

4. La composition selon les revendications précédentes, **caractérisée en ce qu'**il s'agit d'une composition émulsifiable et le diluant est un mélange de succinate de diméthyle, de glutarate de diméthyle et d'adipate de diméthyle.

5. Utilisation des formulations biocides selon les revendications précédentes pour le traitement contre les acariens tétranychides, les larves de lépidoptères et les thrips.

6. Utilisation selon la revendication 5, dans laquelle les acariens tétranychides sont choisis dans le groupe constitué par *Tetranychus urticae, Panonychus citri* et *Eutetranychus orientalis;* les larves de lépidoptères sont choisies dans le groupe constitué par *Spodoptera exigua, Mamestra brassicae, Helicoverpa armigera, Tuta absoluta, Pieris rapae* et *Phyllocnistis citrella* ; et les thrips sont choisis dans le groupe constitué de *Frankliniella occidentalis, Thrips tabaci* et *Pezothrips kellyanus.*
